# FASCICULE DE BREVET EUROPEEN

(11) **EP 1 451 784 B1**
(45) Date de publication et mention de la délivrance du brevet: **03.10.2012**
(21) Numéro de dépôt: 02799789.9
(22) Date de dépôt: 06.12.2002
(51) Int. Cl.: G06F 21/00, G07F 17/16, G07F 7/10

(54) **SYSTEME DE CONTROLE D'ACCES A UN RESEAU ET PROCEDE DE CONTROLE D'ACCES CORRESPONDANT**
SYSTEM ZUR NETZWERKZUGANGSKONTROLLE UND VERFAHREN ZUR ZUGANGSKONTROLLE DAFÜR
SYSTEM FOR CONTROLLING ACCESS TO A NETWORK AND CORRESPONDING ACCESS CONTROL METHOD

(30) Priorité: 10.12.2001 FR 0115912
(43) Date de publication de la demande: 01.09.2004
(73) Titulaire: Morpho, 75015 Paris (FR)
(72) Inventeur: CHABANNE, Hervé, F-78200 Mantes-la-Jolie (FR)
(74) Mandataire: Lavialle, Bruno François Stéphane
(86) Numéro de dépôt international: PCT/FR2002/004212
(87) Numéro de publication internationale: WO 2003/050776

(56) Documents cités:
- EP-A- 0 715 242
- WO-A-98/09256
- FR-A- 2 809 852
- GB-A- 2 329 499
- US-A- 5 036 461

## Description

La présente invention concerne un système de contrôle d'accès à un réseau tel qu'un réseau informatique de type Internet, un réseau de communication, ou plus généralement un réseau de transfert de données. Un tel système est connu du document GB-A-2329499

Il existe des systèmes de contrôle d'accès à un tel réseau qui comprennent des terminaux pourvus d'un lecteur de carte à circuit intégré et de moyens de liaison au réseau, et des cartes à circuit intégré adaptées pour coopérer avec le lecteur. L'administrateur du réseau fournit à chaque utilisateur autorisé un terminal et une carte à circuit intégré qui contient des codes d'identification et des données personnelles relatives à l'utilisateur. Lorsque les informations transitent sur le réseau sous la forme de signaux qui pourraient être également captés par des utilisateurs non autorisés, il est connu de chiffrer ou brouiller les signaux avant leur émission sur le réseau et de mémoriser dans le circuit intégré des cartes des clés permettant la reconstitution du signal chiffré ou brouillé utilisables par les terminaux des utilisateurs autorisés pour déchiffrer le signal. Toutefois, il existe un risque qu'un fraudeur se procuré la carte à circuit intégré d'un des utilisateurs autorisés et parvienne à en extraire les clés. Le fraudeur peut alors fabriquer de fausses cartes utilisant ces clés pour permettre à des tiers non autorisés par l'administrateur du réseau d'accéder aux informations disponibles sur le réseau.

Un but de l'invention est de fournir un système de contrôle d'accès à un réseau offrant plus de sécurité.

A cet effet, on prévoit, selon l'invention, un système de contrôle d'accès à un réseau tel que définit dans la revendication 1.

Avantageusement, la fonction à activer comprend une authentification de la carte à partir d'au moins une information personnalisée contenue dans le circuit intégré de la carte et, de préférence, la fonction à activer comprend un traitement d'un signal provenant du réseau qui comporte avantageusement un déchiffrement de ce signal au moyen d'une clé incorporée dans le module informatique chiffré.

Alors, le traitement du signal et donc l'accès aux informations est précédé d'une authentification de la carte de sorte que ce traitement n'est effectué que si la carte reçue dans le lecteur est authentique.

L'invention a également pour objet un procédé de contrôle d'accès à un réseau au moyen d'un système analogue.

D'autres caractéristiques et avantages de l'invention ressortiront à la lecture de la description qui suit d'un mode de mise en oeuvre particulier non limitatif de l'invention.

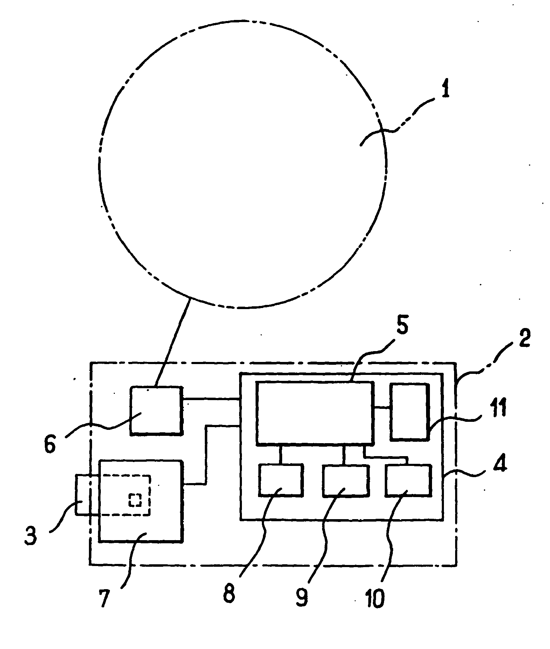

Il sera fait référence à la figure unique annexée représentant schéma par blocs d'un système de contrôle d'accès conforme à l'invention.

Le système de contrôle d'accès conforme à l'invention est destiné en particulier à être utilisé dans un réseau 1 géré par un administrateur et sur lequel circulent des signaux chiffrés ou brouillés représentant des informations ou des données auxquelles des utilisateurs du réseau peuvent accéder moyennant une autorisation de l'administrateur du réseau. Le système de contrôle d'accès a donc pour but d'assurer que seuls les utilisateurs autorisés ont accès aux informations.

Le système de contrôle d'accès comprend des terminaux 2 (dont un seul est visible à la figure) disposés chez chaque utilisateur et une carte à circuit intégré 3 distribuée à chaque utilisateur. Des clés de déchiffrement des signaux chiffrés transitant par le réseau 1 et des données personnelles de l'utilisateur sont mémorisées dans le circuit intégré de la carte à circuit intégré 3 (ces clés sont destinées à être utilisées pour reconstituer les signaux chiffrés ou brouillés de manière à rendre exploitables les informations représentées par ces signaux, par exemple par une opération de déchiffrement et/ou d'élimination du brouillage).

Chaque terminal 2 comprend des moyens informatiques de commande 4 qui comprennent de façon connue en elle-même un microprocesseur et une mémoire. La mémoire contient un programme de commande 5 que le microprocesseur est destiné à exécuter pour assurer le fonctionnement du terminal 2.

Les moyens informatiques de commande 4 sont reliés à des moyens de liaison 6 au réseau 1. La liaison est réalisée par câble.

Les moyens informatiques de commande 4 sont en outre reliés à un lecteur 7 destiné à recevoir la carte à circuit intégré 3.

Selon l'invention, la mémoire des moyens informatiques de commande 4 contient des modules d'activation 8, 9, 10 chiffrés destinés à activer au moins une fonction du terminal 2 et un module de déchiffrement 11 des modules d'activation 8, 9, 10 chiffrés. Par module, on entend un module informatique, c'est-à-dire un sous-programme (ou une partie de programme) destiné à être appelé par le programme de commande 5 pour être exécuté par le microprocesseur des moyens informatiques de commande 4.

Le module d'activation 8 est agencé pour déchiffrer un signal provenant du réseau 1 au moyen d'une clé de déchiffrement contenue dans le module d'activation 8.

Le module d'activation 9 est agencé pour effectuer une authentification de la carte à circuit intégré 3 en fonction d'une des données personnelles contenues dans celle-ci.

Le module d'activation 10 est agencé pour exécuter une authentification telle que celle décrite ci-dessus et un traitement du signal provenant du réseau 1. Ce traitement consiste par exemple à effectuer une modification prédéterminée d'une caractéristique du signal.

Le module d'activation 9 chiffré est ici enregistré dans la mémoire des moyens informatiques de commande 4 lors de la fabrication du terminal 2 tandis que les modules d'activation 8 et 10 chiffrés ont été téléchargés dans la mémoire via le réseau 1.

Dans son mode de fonctionnement classique, les signaux chiffrés ou brouillés transitant par le réseau 1 sont reconstitués par le programme de commande 5 en utilisant une clé calculée à partir des clés contenues dans le circuit intégré de la carte à circuit intégré 3. Les informations contenues dans le signal sont alors accessibles sans déchiffrement de l'un des modules 8, 9, 10.

Dans un premier mode de fonctionnement sécurisé conforme à l'invention, le signal est soumis préalablement à son émission à un premier chiffrement ou brouillage comme dans le mode de fonctionnement classique puis au moins une partie de ce signal est soumise à un deuxième chiffrement. Avant l'émission du signal chiffré, l'administrateur du réseau 1 envoie sur le réseau 1 la clé de déchiffrement du module d'activation 8 chiffré. La clé de déchiffrement du module d'activation 8 chiffré est alors transmise via les moyens de liaison 6 et le programme de commande 5 au module de déchiffrement 11 qui déchiffre alors le module d'activation 8 chiffré. Le module d'activation 8 déchiffré est alors chargé dans une mémoire vive du terminal 2 et le microprocesseur des moyens informatiques de commande 4 exécute le module d'activation 8 déchiffré pour briser le deuxième chiffrement du signal provenant du réseau 1 au moyen de la clé de déchiffrement incorporée dans le module d'activation 8. Le premier chiffrement ou brouillage est lui brisé de la même manière que dans le mode de fonctionnement classique. Après utilisation, le module d'activation 8 déchiffré est effacé de la mémoire vive du terminal.

Dans un deuxième mode de fonctionnement sécurisé conforme à l'invention, l'administrateur émet sur le réseau 1 préalablement à l'émission du signal une clé de déchiffrement du module d'activation 9 qui est transmise au module de déchiffrement 11 afin que celui-ci déchiffre le module d'activation 9. Le module d'activation 9 une fois déchiffré est exécuté par le microprocesseur et effectue une authentification de la carte à circuit intégré 3 en fonction des informations personnelles contenues dans celle-ci. Si la carte à circuit intégré 3 est authentique, le signal est reconstitué conformément au mode de fonctionnement classique. Si la carte à circuit intégré 3 n'est pas authentique, le signal n'est pas reconstitué. L'accès aux informations contenues dans le signal est donc conditionné par le résultat de l'authentification de la carte à circuit intégré 3.

Dans un troisième mode de fonctionnement sécurisé conforme à l'invention, l'administrateur émet sur le réseau 1 préalablement à l'émission du signal une clé de déchiffrement du module d'activation 10 qui est transmise au module de déchiffrement 11 via les moyens de liaison 7 et le programme de commande 5 pour que le module de déchiffrement 11 opère un déchiffrement du module d'activation 10. Le module d'activation 10 une fois déchiffré est exécuté par le microprocesseur et effectue une authentification de la carte à circuit intégré 3 à partir des informations personnelles contenues dans celle-ci. Si la carte à circuit intégré 3 est authentique, le module d'activation 10 effectue le traitement du signal et le signal est reconstitué conformément au mode de fonctionnement classique. Si la carte à circuit intégré 3 n'est pas authentique, le signal n'est pas traité. L'accès aux informations contenues dans le signal est donc là encore conditionné par le résultat de l'authentification de la carte à circuit intégré 3.

Il est possible à tout moment de télécharger d'autres modules d'activation chiffrés dans la mémoire des moyens informatiques de commande 4.

Bien entendu, l'invention n'est pas limitée au mode de réalisation décrit et on peut y apporter des variantes de réalisation sans sortir du cadre de l'invention tel que défini par les revendications.

En particulier, l'invention est applicable à tout réseau de transfert de données notamment par câble, par voie hertzienne ou par satellite (les moyens de liaison comprenant alors une antenne de réception) et est utilisable en liaison avec tout type de terminal relié à un réseau et notamment les terminaux de paiement. L'invention est plus particulièrement applicable et intéressante lorsqu'il n'y a pas de voie de retour du terminal vers le réseau.

La transmission de la clé peut être réalisée avec un certain délai (par exemple de quelques heures à quelques jours) ou immédiatement avant l'utilisation de la fonction.

Le nombre de modules d'activation peut être différent de trois et la structure de ceux-ci peut être différentes de celle décrite par exemple pour que ceux-ci activent ou exécutent plus de deux fonctions du terminal 2. Le module d'activation peut également exercer une fonction permettant d'assurer la continuité de réception ou de traitement des signaux, une fonction affectant un mode normal de fonctionnement du terminal telle qu'une fonction d'arrêt du terminal 2 en cas d'échec de l'authentification de la carte ou apporter une modification à une étape de fonctionnement du terminal (par exemple une correction du programme de commande).

De même, l'architecture du terminal 2 peut être différente de celle décrite. Les moyens informatiques de commande peuvent par exemple comprendre autant de modules de déchiffrement que de modules d'activation chiffrés, ceux-ci étant chiffrés selon des algorithmes différents.

Les modules d'activation chiffrés peuvent être mémorisés dans tout type de mémoire comme des mémoires mortes ou des mémoires vives. Il en est de même pour les modules d'activation une fois déchiffrés.

Les modules d'activation chiffrés peuvent également être implantés dans la carte à circuit intégré (soit lors de la fabrication soit par chargement ultérieur dans le circuit intégré de la carte) au lieu d'être implantés dans le terminal.

En variante, le module informatique est mémorisé dans un support additionnel d'informations apte à coopérer avec un organe de lecture correspondant du terminal. Ce support additionnel d'informations peut par exemple être une carte de type PCMCIA.

## Revendications

1. Système de contrôle d'accès à un réseau (1), comportant au moins un terminal (2) pourvu d'un lecteur (7) de carte à circuit intégré et de moyens de liaison (6) au réseau, et au moins une carte à circuit intégré (3) adaptée pour coopérer avec le lecteur, **caractérisé en ce que** le système comporte une mémoire contenant au moins un module informatique (8, 9, 10) chiffré d'activation d'au moins une fonction du terminal, un moyen de déchiffrement (11) du module informatique au moyen d'une clé et un moyen de transmission (6, 5) de la clé au moyen de déchiffrement via le réseau, et **en ce que** la fonction à activer comprend une authentification de la carte (3) à partir d'au moins une information personnalisée contenue dans le circuit intégré de la carte.

2. Système de contrôle d'accès selon la revendication 1, **caractérisé en ce que** la fonction à activer comprend un traitement d'un signal provenant du réseau (1).

3. Système selon la revendication 2, **caractérisé en ce que** le traitement comprend un déchiffrement d'un signal provenant du réseau (1) au moyen d'une clé incorporée dans le module informatique chiffré.

4. Système selon la revendication 1, **caractérisé en ce que** la fonction à activer affecte un mode normal de fonctionnement du terminal.

5. Procédé de contrôle d'accès à un réseau (1) au moyen d'un système comportant un terminal (2) pourvu d'un lecteur (7) de carte à circuit intégré et de moyens de liaison (6) au réseau, et au moins une carte à circuit intégré (3), **caractérisé en ce qu'**il comprend les étapes de :
- enregistrer dans une mémoire du système au moins un module informatique (8, 9, 10) chiffré d'activation d'au moins une fonction du terminal,
- transmettre via le réseau une clé à un moyen de déchiffrement (11) incorporé au système,
- déchiffrer le module informatique pour activer la fonction du terminal,
et **en ce que** la fonction à activer comprend une authentification de la carte (3) à partir d'au moins une information personnalisée contenue dans le circuit intégré de la carte.

6. Procédé selon la revendication 5, **caractérisé en ce que** le module informatique (8, 9, 10) est téléchargé dans la mémoire via le réseau (1).

7. Procédé selon la revendication 5, **caractérisé en ce que** le module informatique (8, 9, 10) est enregistré dans la mémoire préalablement à l'utilisation du système.

8. Procédé selon la revendication 5, **caractérisé en ce que** le module informatique est mémorisé dans un support additionnel d'informations apte à coopérer avec un organe de lecture correspondant du terminal.

9. Procédé selon l'une quelconque des revendications des revendications 5 à 8, **caractérisé en ce que** la transmission de la clé via le réseau est réalisée immédiatement avant une utilisation de la fonction.

10. Procédé selon l'une quelconque des revendications 5 à 9, **caractérisé en ce que** le module informatique une fois déchiffré est enregistré dans une mémoire vive du terminal pour être exécuté.

## Claims

1. System for controlling access to a network (1), including at least one terminal (2) provided with an integrated circuit card reader (7) and means (6) for connection to the network, and at least one integrated circuit card (3) adapted to cooperate with the reader, **characterized in that** the system includes a memory containing at least one encrypted software module (8, 9, 10) for activating at least one function of the terminal, means (11) for decrypting the software module by means of a key and means (6, 5) for transmitting the key to the decryption means via the network, and **in that** the function to be activated includes authentication of the card (3) on the basis of at least one personalized information contained in the integrated circuit of the card.

2. Access control system according to claim 1, **characterized in that** the function to be activated comprises processing a signal coming from the network (1).

3. Access control system according to claim 2, **characterized in that** processing includes decrypting a signal coming from the network (1) by means of a key incorporated in the encrypted software module.

4. Access control system according to claim 1, **characterized in that** the function to be activated affects a normal mode of operation of the terminal.

5. Method of controlling access to a network (1) by means of a system including a terminal (2) provided with an integrated circuit card reader (7), means (6) for connection to the network and at least one integrated circuit card (3), **characterized in that** it includes the steps of:
- storing in a memory of the system at least one encrypted software module (8, 9, 10) for activating at least one function of the terminal,
- transmitting a key via the network to decryption means (11) incorporated in the system,
- decrypting the software module to activate the function of the terminal,
and **in that** the function to be activated comprises authentication of the card (3) on the basis of at least one personalized information contained in the integrated circuit of the card.

6. Method according to claim 5, **characterized in that** the software module (8, 9, 10) is downloaded into the memory via the network (1).

7. Method according to claim 5, **characterized in that** the software module (8, 9, 10) is stored in the memory before the system is used.

8. Method according to claim 5, **characterized in that** the software module is stored in an additional information medium adapted to cooperate with a corresponding reader unit of the terminal.

9. Method according to any one of claims 5 to 8, **characterized in that** the key is transmitted via the network immediately before the function is used.

10. Method according to any one of claims 5 to 9, **characterized in that** the software module when decrypted is stored in a random access memory of the terminal in order to be executed.

## Patentansprüche

1. System zur Netzwerkzugangskontrolle (1), umfassend mindestens ein Terminal (2), das mit einem IC-Kartenlesegerät (7) und Mitteln zur Verbindung (6) an das Netzwerk versehen ist, und mindestens eine IC-Karte (3), die so adaptiert ist, dass sie mit dem Lesegerät kooperieren kann, **dadurch gekennzeichnet, dass** das System einen Speicher umfasst, der mindestens ein verschlüsseltes Datenverarbeitungsmodul (8, 9, 10) zur Aktivierung mindestens einer Terminalfunktion enthält, ein Mittel zum Entschlüsseln (11) des Datenverarbeitungsmoduls mit Hilfe eines Schlüssels und ein Mittel zur Übertragung (6, 5) des Schlüssels an das Entschlüsselungsmittel über das Netzwerk, und dadurch dass die zu aktivierende Funktion eine Authentifizierung der Karte (3), ausgehend von mindestens einer personalisierten Information, die im integrierten Schaltkreis der Karte enthalten ist, umfasst.

2. System zur Netzwerkzugangskontrolle nach Anspruch 1, **dadurch gekennzeichnet, dass** die zu aktivierende Funktion eine Verarbeitung eines Signals, das aus dem Netzwerk (1) stammt, umfasst.

3. System nach Anspruch 2, **dadurch gekennzeichnet, dass** die Verarbeitung eine Entschlüsselung eines aus dem Netzwerk (1) stammenden Signals mittels eines Schlüssels, der im verschlüsselten Datenverarbeitungsmodul enthalten ist, umfasst.

4. System nach Anspruch 1, **dadurch gekennzeichnet, dass** die zu aktivierende Funktion einen Normalmodus des Terminalbetriebs betrifft.

5. Verfahren zur Netzwerkzugangskontrolle (1) mit Hilfe eines Systems, das ein Terminal (2), das mit einem Lesegerät (7) für IC-Karten und Mitteln zur Verbindung (6) an das Netzwerk ausgestattet ist, und mindestens eine IC-Karte (3) umfasst, **dadurch gekennzeichnet, dass** es die folgenden Schritte umfasst:
- Einspeichern mindestens eines verschlüsselten Datenverarbeitungsmoduls (8, 9, 10) zur Aktivierung mindestens einer Terminalfunktion in einen Systemspeicher;
- Übertragen eines Schlüssels an ein im System integriertes Entschlüsselungsmittel (11) über das Netzwerk;
- Entschlüsseln des Datenverarbeitungsmöduls zum Aktivieren der Terminalfunktion;
und ferner **dadurch gekennzeichnet, dass** die zu aktivierende Funktion eine Authentifizierung der Karte (3) ausgehend von mindestens einer personalisierten Information, die im integrierten Schaltkreis der Karte enthalten ist, umfasst.

6. Verfahren nach Anspruch 5, **dadurch gekennzeichnet, dass** das Datenverarbeitungsmodul (8, 9, 10) in den Speicher über das Netzwerk (1) geladen wird.

7. Verfahren nach Anspruch 5, **dadurch gekennzeichnet, dass** das Datenverarbeitungsmodul (8, 9, 10) vor Inbetriebnahme des Systems im Speicher eingespeichert wird.

8. Verfahren nach Anspruch 5, **dadurch gekennzeichnet, dass** das Datenverarbeitungsmodul in einem zusätzlichen Informations-Datenträger gespeichert wird, der geeignet ist, mit einem des Terminals entsprechenden Leseorgan zu kooperieren.

9. Verfahren nach einem der Ansprüche 5 bis 8, **dadurch gekennzeichnet, dass** die Übertragung des Schlüssels über das Netzwerk unmittelbar vor einer Benutzung der Funktion erfolgt.

10. Verfahren nach einem der Ansprüche 5 bis 9, **dadurch gekennzeichnet, dass** das Datenverarbeitungsmodul, sobald es einmal entschlüsselt ist, in einem Arbeitsspeicher des Terminals gespeichert wird, damit es ausgeführt werden kann.
